# EUROPÄISCHE PATENTSCHRIFT

(11) **EP 1 933 540 B1**
(45) Veröffentlichungstag und Bekanntmachung des Hinweises auf die Patenterteilung: **15.11.2017**
(21) Anmeldenummer: 07024035.3
(22) Anmeldetag: 12.12.2007
(51) Int. Cl.: H04M 1/725, H04M 1/247, H04W 4/14, H04W 88/02

(54) **Erzeugung von mittels eines Nachrichtendienstes eines Mobilfunknetzes übertragbaren Nachrichten**
Creation of messages transferred by the messaging service of a mobile radio network
Production d'informations transmissibles à l'aide d'un service d'informations d'un réseau hertzien mobile

(30) Priorität: 13.12.2006 DE 102006059280
(43) Veröffentlichungstag der Anmeldung: 18.06.2008
(73) Patentinhaber: Vodafone Holding GmbH, 40213 Düsseldorf (DE)
(72) Erfinder: de Bodic, Gwenael, Montreal H4A2H3 (CA); Schliwa, Karin, 50677 Köln (DE); Weissert, Patrick, 40549 Düsseldorf (DE); Holzberg, Jan, 40213 Düsseldorf (DE)
(74) Vertreter: Weisbrodt, Bernd

(56) Entgegenhaltungen:
- WO-A-99/16181
- WO-A-2005/018257
- WO-A-2005/122613
- US-A1- 2003 224 814

## Beschreibung

Die vorliegende Erfindung betrifft ein Verfahren zur Erzeugung einer mittels wenigstens eines Nachrichtendienstes eines Mobilfunknetzes an wenigstens einen Empfänger übertragbaren Nachricht seitens eines in einem Mobilfunknetz betreibbaren mobilen Endgerätes, wobei die Nachricht wenigstens eine Kontaktinformation des wenigstens einen Empfängers der Nachricht und einen wenigstens einen Informationstyp beinhaltenden Nachrichteninhalt aufweist und wobei der Nachrichteninhalt der Nachricht durch zumindest eine seitens wenigstens einer Eingabeeinrichtung des mobilen Endgerätes erfolgende Betätigungseingabe erfasst und zumindest im Rahmen der Erfassung in einem Anzeigebereich einer optischen Anzeigeeinrichtung des mobilen Endgerätes wiedergegeben wird.

Gegenstand der vorliegenden Erfindung sind ferner ein mobiles Endgerät zum Betrieb in einem Mobilfunknetz, insbesondere ein Mobilfunktelefon, und ein Mobilfunkteilnehmer-Identifikations-Modul (SIM-Karte) zur Nutzung in einem in einem Mobilfunknetz betreibbaren mobilen Endgerät, vorzugsweise gemäß dem GSM- und/oder UMTS-Funknetzstandard, welche zur Ausführung eines erfindungsgemäßen Verfahrens ausgebildet sind.

Verfahren und Vorrichtungen zur Erzeugung von mittels eines Nachrichtendienstes eines Mobilfunknetzes übertragbaren Nachrichten sind im Stand der Technik in verschiedenen Ausgestaltungen bekannt, beispielsweise aus der GB 2 386 299 A, der DE 10 2004 005 900 A1, der WO 2005/018257, der WO 99/16181, der WO 2005/122613 und der US 2003/0224814 A1. Die bisher bekannte Nachrichtenerzeugung ist hinsichtlich der Funktionalitäten und/oder der Handhabbarkeit seitens eines mobilen Endgerätes eingeschränkt, insbesondere hinsichtlich der mittlerweile seitens der Mobilfunknetze zur Verfügung stehenden Nachrichtendienste zur Übertragung von Nachrichten über das Mobilfunknetz, wie SMS, MMS und/oder E-Mail, die jeweils unterschiedliche Möglichkeiten für Nachrichteninhalte und mit diesen Nachrichteninhalten genutzten Informationstypen sowie unterschiedliche Anforderungen an die Übertragung der Nachrichten und damit an den Anwender stellen.

Der Erfindung liegt in Anbetracht dieses Standes der Technik die Aufgabe zugrunde, eine Nachrichtenerzeugung der eingangs genannten Art zu verbessern, insbesondere hinsichtlich einer einfacheren und komfortableren Nutzung und/oder Handhabung hinsichtlich der im Mobilfunknetz zur Verfügung stehenden Funktionalitäten und/oder Nachrichtendienste zur Übertragung von Nachrichten über das Mobilfunknetz. Die Erfindung ist in den unabhängigen Ansprüchen 1, 14 und 15 definiert. Weitere Ausgestaltungen der Erfindung sind aus den abhängigen Ansprüchen 2 bis 13 zu entnehmen. Zur technischen Lösung der Aufgabe wird mit der vorliegenden Erfindung ein Verfahren zur Erzeugung einer mittels wenigstens eines Nachrichtendienstes eines Mobilfunknetzes an wenigstens einen Empfänger übertragbaren Nachricht seitens eines in einem Mobilfunknetz betreibbaren mobilen Endgerätes, wobei die Nachricht wenigstens eine Kontaktinformation des wenigstens einen Empfängers der Nachricht und einen wenigstens einen Informationstyp beinhaltenden Nachrichteninhalt aufweist und wobei der Nachrichteninhalt der Nachricht durch zumindest eine seitens wenigstens einer Eingabeeinrichtung des mobilen Endgerätes erfolgende Betätigungseingabe erfasst und zumindest im Rahmen der Erfassung in einem Anzeigebereich einer optischen Anzeigeeinrichtung des mobilen Endgerätes wiedergegeben wird, vorgeschlagen, welches dadurch gekennzeichnet ist, dass seitens des mobilen Endgerätes anhand des erfassten Nachrichteninhalts der Nachricht automatisch der Nachrichtendienst des Mobilfunknetzes zur Übertragung der Nachricht bestimmt wird.

Der Erfindung liegt die Erkenntnis zugrunde, dass eine einfachere und komfortablere Nutzung und/oder Handhabung hinsichtlich der im Mobilfunknetz zur Verfügung stehenden Funktionalitäten und/oder Nachrichtendienste zur Übertragung von Nachrichten über das Mobilfunknetz erzielbar ist, wenn der Nutzer beziehungsweise Anwender bei der Erzeugung einer Nachricht nicht mehr darüber nachdenken oder auswählen muss, mit welchem Nachrichtendienst des Mobilfunknetzes die Nachricht übertragen werden muss beziehungsweise kann. Erfindungsgemäß wird der Nachrichtendienst des Mobilfunknetzes zur Übertragung der Nachricht automatisch anhand des erfassten Nachrichteninhaltes der Nachricht bestimmt. Die Bestimmung des Nachrichtendienstes, also insbesondere der Versandmethode der zu übertragenden Nachricht mittels eines Nachrichtendienstes des Mobilfunknetzes wie SMS, MMS oder E-Mail, erfolgt dabei vorteilhafterweise optimiert.

Vorteilhafterweise wird im Rahmen der Bestimmung des Nachrichtendienstes des Mobilfunknetzes zur Übertragung der Nachricht die zur Verfügung stehende wenigstens eine Kontaktinformation des wenigstens einen Empfängers berücksichtigt. So wird erfindungsgemäß als ein Kriterium zur Bestimmung des zu verwendenden Nachrichtendienstes des Mobilfunknetzes für die Nachrichtenübertragung durch die zur Verfügung stehenden Kontaktinformationen eines Empfängers eine Vorauswahl nach Art eines Filters für den zu verwendenden Nachrichtendienst der Nachrichtenübertragung realisiert.

Eine besonders vorteilhafte Ausgestaltung der Erfindung sieht vor, dass eine Anpassung des erfassten Nachrichteninhalts einer Nachricht im Bedarfsfall an das Format des zur Nachrichtenübertragung bestimmten Nachrichtendienstes des Mobilfunknetzes angepasst wird. Vorteilhafterweise kann so eine Anpassung des Nachrichteninhalts beziehungsweise des Formats des Nachrichteninhalts an den für den jeweiligen Empfänger entsprechend seiner zur Verfügung stehenden Kontaktinformation angepasstes Format hinsichtlich des nutzbaren Nachrichtenübertragungsdienstes erfolgen.

Eine weitere vorteilhafte Ausgestaltung der Erfindung sieht vor, dass die Bestimmung des Nachrichtendienstes des Mobilfunknetzes zur Übertragung der Nachricht unter Berücksichtigung nutzerspezifischer Vorgaben erfolgt, vorzugsweise unter Berücksichtigung der Übertragungskosten im Zusammenhang mit der zu übertragenen Nachricht. Vorteilhafterweise wird im Rahmen zu berücksichtigender nutzerspezifischer Vorgaben das nutzerspezifische Nachrichtenübertragungsverhalten des Nutzers berücksichtigt, vorteilhafterweise bezogen auf den jeweiligen Nachrichtenempfänger, der Nachrichtenübertragungssituation und/oder dergleichen nutzerspezifischer Charakteristika.

Vorteilhafterweise wird die Nachricht durch Zusammenführung der wenigstens einen Kontaktinformation des wenigstens einen Empfängers und des Nachrichteninhalts seitens des mobilen Endgerätes erzeugt. Erfindungsgemäß kann so zunächst der für die Nachricht vorgesehene Nachrichteninhalt vom Nutzer eingegeben werden und die Nachricht anschließend durch vorzugsweise automatisch erfolgendes Hinzufügen der Kontaktinformation des wenigstens einen Empfängers erzeugt werden. Vorteilhafterweise wird im Rahmen der Zusammenführung anhand der Kontaktinformation des Empfängers der zu verwendende Nachrichtenübertragungsdienst des Mobilfunknetzes bestimmt und erfolgt bei Bedarf eine vorzugsweise automatische Anpassung des Nachrichteninhalts hinsichtlich des Formats an das Format des Nachrichtenübertragungsdienstes des Mobilfunknetzes.

Gemäß einer weiteren vorteilhaften Ausgestaltung der Erfindung wird die Nachricht mittels des bestimmten Nachrichtendienstes des Mobilfunknetzes an den wenigstens einen Empfänger übertragen, vorzugsweise initiiert durch eine seitens einer Eingabeeinrichtung des mobilen Endgerätes erfolgende Betätigungseingabe, besonders bevorzugt ohne das weitere Betätigungseingaben erforderlich sind. Gemäß einer weiteren vorteilhaften Ausgestaltung der Erfindung wird die Übertragung der Nachricht mit der Nachrichtenerzeugung initiiert, vorzugsweise automatisch mit und/oder durch Abschluss der Erfassung des Nachrichteninhalts der Nachricht.

Gemäß einer weiteren besonders vorteilhaften Ausgestaltung der Erfindung wird die Nachrich. als eine Antwortnachricht auf eine seitens des mobilen Endgerätes empfangende und/oder bevorratete Nachricht erzeugt, wobei in einem ersten Anzeigebereich der optischen Anzeigeeinrichtung des mobilen Endgerätes zumindest der Nachrichteninhalt der seitens des mobilen Endgerätes empfangenden und/oder bevorrateten Nachricht zumindest teilweise wiedergegeben und in einem zweiten Anzeigebereich der optischen Anzeigeeinrichtung des mobilen Endgerätes zumindest der erfasste Nachrichteninhalt der zu erzeugenden Nachricht zumindest teilweise wiedergegeben wird. Erfindungsgemäß lassen sich so aufgrund der unterschiedlichen Anzeigebereiche Nutzung und/oder Handhabung der Nachrichtenerzeugung weiter vereinfachen und komfortabler gestalten. Vorteilhafterweise werden der erste Anzeigebereich und der zweite Anzeigebereich gleichzeitig wiedergegeben. Gemäß einer weiteren Ausgestaltung der Erfindung werden in den Anzeigebereichen neben dem Nachrichteninhalt vorteilhafterweise auch der Nachrichtensender beziehungsweise der Nachrichtenempfänger wiedergegeben und/oder kenntlich gemacht. Vorteilhafterweise wird in dem jeweiligen Anzeigebereich der Nachrichteninhalt zumindest bei Bedarf scrollbar, dass heißt als Bildlauf, welcher ein Verschieben von Inhalten seines Anzeigebereichs ermöglicht, wiedergegeben. Vorteilhafterweise wird dabei im Bereich eines Randes des Anzeigebereiches die aktuelle Position des angezeigten Inhalts des Anzeigebereiches durch ein Schieber auf einer sogenannten Bildlaufleiste angezeigt.

Eine weitere vorteilhafte Ausgestaltung der Erfindung ist gekennzeichnet durch eine Ausführung eines erfindungsgemäßen Verfahrens mittels eines seitens des mobilen Endgerätes und/oder eines seitens eines von dem mobilen Endgerät genutzten Mobilfunkteilnehmer-Identifikations-Moduls ausführbaren Anwendungsprogramms, vorzugsweise mittels eines seitens des mobilen Endgerätes und/oder eines seitens des Mobilfunkteilnehmer-Identifikations-Moduls gespeicherten Applets.

Gegenstand der vorliegenden Erfindung ist ferner ein mobiles Endgerät zum Betrieb in einem Mobilfunknetz, insbesondere ein Mobilfunktelefon, vorzugsweise gemäß dem GSM- und/oder UMTS-Funknetzstandard, welches zur Ausführung wenigstens eines Teils eines erfindungsgemäßen Verfahrens ausgebildet und/oder eingerichtet ist.

Darüber hinaus betrifft die vorliegende Erfindung ein Mobilfunkteilnehmer-Identifikations-Modul, vorzugsweise in Form einer sogenannten SIM-Karte, zur Nutzung in einem in einem Mobilfunknetz betreibbaren mobilen Endgerät, vorzugsweise gemäß dem GSM- und/oder UMTS-Funknetzstandard, welches zur Ausführung wenigstens eines Teils eines erfindungsgemäßen Verfahrens ausgebildet und/oder eingerichtet ist, vorzugsweise in einem erfindungsgemäßen mobilen Endgerät.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: in einer schematischen Prinzipdarstellung ein Ausführungsbeispiel eines Anwendungsfalls eines erfindungsgemäßen Verfahrens,
- Fig. 2: in einer schematischen Prinzipdarstellung ein Ausführungsbeispiel eines weiteren Anwendungsfalls eines erfindungsgemäßen Verfahrens,
- Fig. 3: anhand schematischer Darstellungen einer optischen Anzeigeeinrichtung eines erfindungsgemäßen mobilen Endgerätes ein Ausführungsbeispiel einer erfindungsgemäßen Nachrichtenerzeugung und
- Fig. 4: anhand schematischer Darstellungen einer optischen Anzeigeeinrichtung eines erfindungsgemäßen mobilen Endgerätes ein weiteres Ausführungsbeispiel einer erfindungsgemäßen Nachrichtenerzeugung.

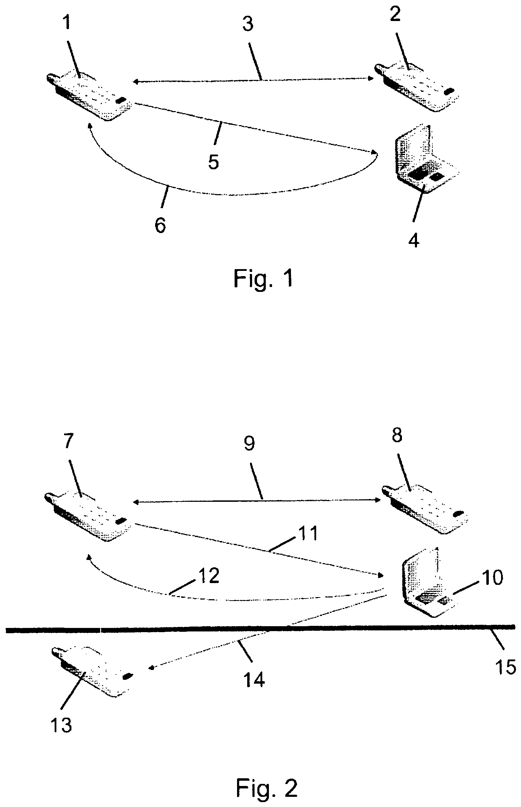

Bei dem in Fig. 1 dargestellten Anwendungsfall eines Verfahrens zur Erzeugung einer mittels wenigstens eines Nachrichtendienstes eines Mobilfunknetzes für wenigstens einen Empfänger übertragbaren Nachricht seitens eines in einem Mobilfunknetz betreibbaren mobilen Endgerätes ist das mobile Endgerät 1, vorliegend ein Mobilfunktelefon, als Nachrichtensender und sind das mobile Endgerät 2, vorliegend ein Mobilfunktelefon und das Endgerät 4, vorliegend ein ein mobiles Endgerät 4 bereitstellender Rechner in Form eines Notebooks, als Nachrichtenempfänger betrieben.

Eine Nachricht wird seitens des als Sender betriebenen mobilen Endgerätes 1 erzeugt, wobei die Nachricht wenigstens eine Kontaktinformation wenigstens eines Empfängers 2 und/oder 4 der Nachricht und einen wenigstens einen Informationstyp, insbesondere Text-, Sprache-, Bild-, Audio- und/oder Videoinformationen beziehungsweise -daten, beinhaltenden Nachrichteninhalt aufweist. Der Nachrichteninhalt der Nachricht wird dabei im Rahmen der Erzeugung der Nachricht durch eine seitens wenigstens einer Eingabeeinrichtung, also einer Tastatur und/oder einem Mikrofon, des mobilen Endgerätes 1 erfolgende Betätigungseingabe erfasst und zumindest im Rahmen der Erfassung in einem Anzeigebereich einer optischen Anzeigeeinrichtung, vorliegend einem Display, des mobilen Endgerätes 1 wiedergegeben.

Seitens des die Nachricht erzeugenden mobilen Endgerätes 1 wird vorliegend im Rahmen der Nachrichtenerzeugung automatisch anhand des erfassten Nachrichteninhalts der Nachricht der zur Übertragung der Nachricht zu verwendende Nachrichtendienst des Mobilfunknetzes bestimmt. Der Nutzer des als Nachrichtensender dienenden mobilen Endgerätes 1 kann so die zur Nachrichtenübertragung vorgesehene Nachricht seitens des mobilen Endgerätes 1 erstellen, ohne sich im Rahmen der Erstellung Gedanken über das für die Übertragung vorgesehene Format des Nachrichtendienstes des Mobilfunknetzes machen zu müssen. Im Falle der in Fig. 1 mit 3 gekennzeichneten Nachrichtenübertragung sendet das mobile Endgerät 1 über das Mobilfunknetz mittels SMS oder mittels MMS als Nachrichtendienst des Mobilfunknetzes eine Nachricht an das als Nachrichtenempfänger im Mobilfunknetz betriebene mobile Endgerät 2 (SMS(MSISDN)) oder (MMS(MSISDN)). Der Empfänger 2 der Nachricht des Senders 1 kann, wie anhand des mit dem Bezugszeichen 3 gekennzeichneten Doppelpfeils ersichtlich, auf die Nachricht mit einer entsprechenden Antwortnachricht, vorliegend also mittels einer SMS oder einer MMS dem Sender 1 antworten.

Bei der in Fig. 1 mit 5 gekennzeichneten Nachrichtenübertragung wird eine seitens des als Sender betriebenen mobilen Endgerätes 1 erzeugte Nachricht über das Mobilfunknetz an das als Nachrichtenempfänger betriebene Endgerät 4 übertragen. Für die Nachrichtenübertragung 5 wird dabei als Kontaktinformation des Nachrichtenempfängers eine dem Nachrichtenempfänger 4 zugeordnete E-Mail-Aderesse verwendet, welche vorliegend einer Rufnummer, also einer MSISDN, des Empfängers 4 im Mobilfunknetz zugeordnet beziehungsweise für diese eingerichtet ist, verwendet. Die Nachrichtenübertragung 5 erfolgt mittels MMS als Nachrichtendienst des Mobilfunknetzes. Der Nachrichtenempfänger 4 kann auf die mittels Nachrichtenübertragung 5 erhaltende E-Mail dem Nachrichtensender 1 mittels einer MMS als Nachrichtendienst 6 antworten. Die Übertragung einer entsprechenden Antwortnachricht von dem Nachrichtenempfänger 4 an den Nachrichtensender 1 ist in Fig. 1 mit dem mit 6 gekennzeichneten Pfeil dargestellt. Die Nachrichtenübertragung 6 der Antwortnachricht von dem Nachrichtenempfänger 4 zu dem Nachrichtensender 1 erfolgt vorliegend vorteilhafterweise mittels E@SY-reply mittels MMS.

Seitens des als Nachrichtensender dienenden mobilen Endgerätes 1 werden sämtliche gesendeten und/oder empfangenen Nachrichten unabhängig von ihrem Nachrichtenübertragungsformat, also unabhängig von SMS, MMS und/oder E-Mail, in einem dafür vorgesehenen beziehungsweise eingerichteten Speicherbereich des mobilen Endgerätes 1, einer sogenannten Inbox, gespeichert.

Bei dem in Fig. 2 dargestellten Anwendungsfall eines Verfahrens zur Erzeugung einer mittels wenigstens eines Nachrichtendienstes eines Mobilfunknetzes für wenigstens einen Empfänger übertragbaren Nachricht seitens eines in einem Mobilfunknetz betreibbaren mobilen Endgerätes ist das mobile Endgerät 7, vorliegend ein Mobilfunktelefon, als Nachrichtensender und sind das mobile Endgerät 8, vorliegend ein Mobilfunktelefon und das Endgerät 10, vorliegend ein ein mobiles Endgerät 10 bereitstellender Rechner in Form eines Notebooks, als Nachrichtenempfänger betrieben.

Eine Nachricht wird seitens des als Sender betriebenen mobilen Endgerätes 7 erzeugt, wobei die Nachricht wenigstens eine Kontaktinformation wenigstens eines Empfängers 8 und/oder 10 der Nachricht und einen wenigstens einen Informationstyp, insbesondere Text-, Sprache-, Bild-, Audio- und/oder Videoinformationen beziehungsweise -daten, beinhaltenden Nachrichteninhalt aufweist. Der Nachrichteninhalt der Nachricht wird dabei im Rahmen der Erzeugung der Nachricht durch eine seitens wenigstens einer Eingabeeinrichtung, also einer Tastatur und/oder einem Mikrofon, des mobilen Endgerätes 7 erfolgende Betätigungseingabe erfasst und zumindest im Rahmen der Erfassung in einem Anzeigebereich einer optischen Anzeigeeinrichtung, vorliegend einem Display, des mobilen Endgerätes 7 wiedergegeben.

Seitens des die Nachricht erzeugenden mobilen Endgerätes 7 wird vorliegend im Rahmen der Nachrichtenerzeugung automatisch anhand des erfassten Nachrichteninhalts der Nachricht der zu Übertragung der Nachricht zu verwendende Nachrichtendienst des Mobilfunknetzes bestimmt. Der Nutzer des als Nachrichtensender dienenden mobilen Endgerätes 7 kann so die zur Nachrichtenübertragung vorgesehene Nachricht seitens des mobilen Endgerätes 7 erstellen, ohne sich im Rahmen der Erstellung Gedanken über das für die Übertragung vorgesehene Format des Nachrichtendienstes des Mobilfunknetzes machen zu müssen. Im Falle der in Fig. 2 mit 9 gekennzeichneten Nachrichtenübertragung sendet das mobile Endgerät 7 über das Mobilfunknetz mittels SMS oder mittels MMS als Nachrichtendienst des Mobilfunknetzes eine Nachricht an das als Nachrichtenempfänger im Mobilfunknetz betriebene mobile Endgerät 8 (SMS(MSISDN)) oder (MMS(MSISDN)). Der Empfänger 8 der Nachricht des Senders 7 kann, wie anhand des mit dem Bezugszeichen 9 gekennzeichneten Doppelpfeils ersichtlich, auf die Nachricht mit einer entsprechenden Antwortnachricht, vorliegend also mittels einer SMS oder einer MMS dem Sender 7 antworten.

Bei der in Fig. 2 mit 11 gekennzeichneten Nachrichtenübertragung wird eine seitens des als Sender betriebenen mobilen Endgerätes 7 erzeugte Nachricht über das Mobilfunknetz an das als Nachrichtenempfänger betriebene Endgerät 10 übertragen. Für die Nachrichtenübertragung 11 wird dabei als Kontaktinformation des Nachrichtenempfängers eine dem Nachrichtenempfänger 10 zugeordnete E-Mail-Aderesse verwendet, welche vorliegend einer Rufnummer, also einer MSISDN, des Empfängers 10 im Mobilfunknetz zugeordnet beziehungsweise für diese eingerichtet ist, verwendet. Die Nachrichtenübertragung 11 erfolgt mittels MMS als Nachrichtendienst des Mobilfunknetzes. Der Nachrichtenempfänger 10 kann auf die mittels Nachrichtenübertragung 11 erhaltende E-Mail dem Nachrichtensender 7 mittels einer MMS als Nachrichtendienst 12 antworten. Die Übertragung einer entsprechenden Antwortnachricht von dem Nachrichtenempfänger 10 an den Nachrichtensender 7 ist in Fig. 2 mit dem mit 12 gekennzeichneten Pfeil dargestellt. Die Nachrichtenübertragung 12 der Antwortnachricht von dem Nachrichtenempfänger 10 zu dem Nachrichtensender 7 erfolgt vorliegend vorteilhafterweise mittels E@SY-reply mittels MMS.

Darüber hinaus kann die seitens des Nachrichtensenders 7 erzeugte Nachricht im Rahmen der Nachrichtenübertragung 11 als E-Mail über einen Push-E-Mail-Dienst an den Nachrichtenempfänger 4 übertragen werden. Dazu wird seitens des die Nachricht erzeugenden mobilen Endgerätes als Kontaktinformation für eine für den Nachrichtenempfänger eingerichtete E-Mail-Adresse eines Push-E-Mail-Dienstes verwendet.

Seitens des als Nachrichtensender dienenden mobilen Endgerätes 7 werden sämtliche gesendeten und/oder empfangenen Nachrichten unabhängig von ihrem Nachrichtenübertragungsformat, also unabhängig von SMS, MMS und/oder E-Mail, in einem dafür vorgesehenen beziehungsweise eingerichteten Speicherbereich des mobilen Endgerätes 7, einer sogenannten Inbox, gespeichert.

Im Rahmen einer Antwort auf die Nachricht des Nachrichtensenders 1 an den Nachrichtenempfänger 4 kann dieser neben einer direkten Antwort mittels Nachrichtenübertragung 12 an den Nachrichtensender 1 desweiteren eine Antwortnachricht an einen weiteren Kommunikationspartner übertragen. Eine entsprechende Nachrichtenübertragung ist in Fig. 2 durch den mit dem Bezugszeichen 14 gekennzeichneten Pfeil dargestellt. Im vorliegenden Fall überträgt der Nachrichtenempfänger 4 eine entsprechende Antwortnachricht mittels der Nachrichtenübertragung 14 an die E-Mail-Adresse eines in einem anderen Mobilfunknetz betreibbaren mobilen Endgerätes 13. Die Trennung der Mobilfunknetze ist in Fig. 2 durch den mit 15 gekennzeichneten Balken symbolisch dargestellt. Für den Nutzer des mobilen Endgerätes 13 ist seitens des für diesen zuständigen Mobilfunknetzens ein sogenannter Push-E-Mail-Dienst eingerichtet. Dieser Push-E-Mail-Dienst beinhaltet, dass seitens des Mobilfunknetzes für den Nutzer des mobilen Endgerätes 13 beziehungsweise für die diesem zugeordnete Rufnummer (MSISDN) eine E-Mail-Adresse eingerichtet ist. An die E-Mail-Adresse gesendete Nachrichten werden dem Nutzer des mobilen Endgerätes 13 dann über das Mobilfunknetz direkt als E-Mail übertragen. Entsprechende Push-E-Mail-Dienste können unabhängig von dem Mobilfunknetzbetreiber des mobilen Endgerätes 13 auch von einem anderen Diensteanbieter, einem sogenannten Drittanbieter (vorliegend Third Party genannt) angeboten werden.

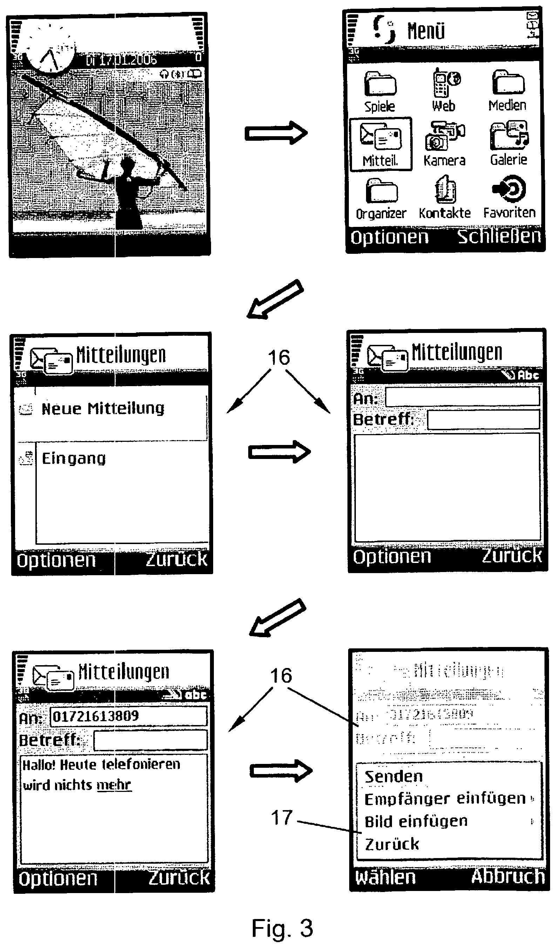

Bei dem in Fig. 3 dargestellten Ausführungsbeispiel einer Nachrichterzeugung seitens eines mobilen Endgerätes 1 beziehungsweise 7 wird seitens der Anzeigeeinrichtung des mobilen Endgerätes 1 beziehungsweise 7 zunächst die Startansicht, das sogenannte "Idle Screen" wiedergegeben. Durch entsprechende Betätigungseingabe seitens einer als Eingabeeinrichtung dienenden Tastatur des mobilen Endgerätes 1 beziehungsweise 7 gelangt der Nutzer, wie in Fig. 3 durch den nach rechts weisenden Pfeil dargestellt, zu der sogenannten Menüansicht. Durch entsprechende Betätigungseingaben seitens der Eingabeeinrichtung des mobilen Endgerätes 1 gelangt der Nutzer schließlich durch Auswahl des Menüpunktes "Mitteil." entsprechend dem nach links unten weisenden Pfeil in das Menü "Mitteilungen". Hier werden dem Nutzer des mobilen Endgerätes 1 beziehungsweise 7 eingegangene Mitteilungen (Menüpunkt: "Eingang") angezeigt. Ferner kann der Nutzer neue Mitteilungen erstellen (Menüpunkt: Neue Mitteilungen"). Die Menüpunkte in dem Menü "Mitteilungen" sind dabei durch entsprechende Tastenbetätigung seitens einer Eingabeeinrichtung des mobilen Endgerätes auswählbar und werden in einem Anzeigebereich 16 seitens der Anzeigeeinrichtung des mobilen Endgerätes 1 beziehungsweise 7 angezeigt. Die entsprechende Betätigungseingabe seitens der Eingabeeinrichtung des mobilen Endgerätes 1 beziehungsweise 7 gelangt der Nutzer dem in Fig. 3 nach rechts weisenden Pfeil folgend in das Menü zur Erstellung einer neuen Mitteilung. Die als Mitteilung zu versendende Nachricht wird durch entsprechende Betätigungseingaben seitens der Eingabeeinrichtung des mobilen Endgerätes 1 beziehungsweise 7 erstellt, wie anhand der dem in Fig. 3 nach links unten weisenden Pfeil folgenden Darstellung erkennbar. Im Rahmen der Nachrichtenerzeugung wird dabei die Kontaktinformation des Nachrichtenempfängers, vorliegend "01721613809" erfasst und in einem unteren Anzeigebereich 16 der Anzeigeeinrichtung der Nachrichteninhalt, vorliegend ein Text ("Hallo! Heute telefonieren wird nichts mehr") erfasst. Durch entsprechende Betätigungseingabe wird, entsprechend dem in Fig. 3 nach rechts weisenden Pfeil folgend seitens der Anzeigeeinrichtung des mobilen Endgerätes 1 beziehungsweise 7 in dem Anzeigebereich 16 ein weiterer Anzeigebereich 17 eröffnet, welcher dem Nachrichtenersteller seitens des mobilen Endgerätes 1 beziehungsweise 7 verschiedene Optionen zur Nachrichtenerzeugung beziehungsweise Übertragung zur Betätigungseingabe beziehungsweise Aktivierung anbietet ("Senden", "Empfänger einfügen", "Bild einfügen" und "Zurück").

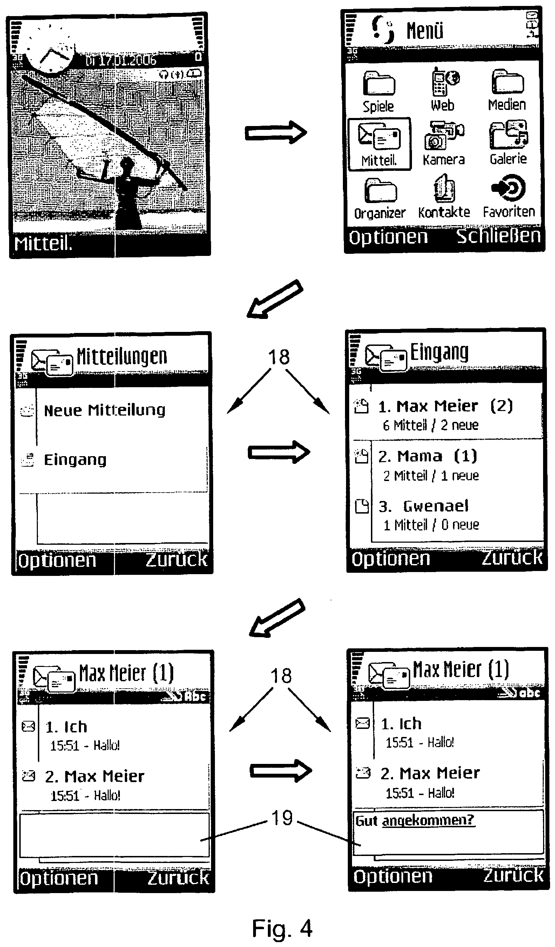

Bei dem in Fig. 4 dargestellten Ausführungsbeispiel wird seitens der Anzeigeeinrichtung des mobilen Endgerätes 1 beziehungsweise 7 im Startbildschirm (Idle Screen) dem Nutzer des mobilen Endgerätes 1 beziehungsweise 7 angezeigt, dass Mitteilungen für diesen eingegangen sind.

Seitens des Startbildschirms wird dies durch die unten links wiedergegebene Anzeige "Mitteil." dem Nutzer des mobilen Endgerätes 1 beziehungsweise 7 signalisiert. Durch entsprechende Betätigungseingabe seitens einer Eingabeeinrichtung des mobilen Endgerätes 1, in Fig. 4 symbolisch dargestellt durch den nach rechts weisenden Pfeil, gelangt der Nutzer zu der sogenannten Menüauswahl ("Menü"). Durch entsprechende Betätigungseingaben seitens der Eingabeeinrichtung des mobilen Endgerätes 1 beziehungsweise 7 gelangt dieser durch Auswahl des Menüpunktes "Mitteil." dem in Fig. 4 nach links unten weisenden Pfeil folgend in das Menü zur Erzeugung von Nachrichten, vorliegend "Mitteilungen genannt. Seitens des Menüs "Mitteilungen stehen dem Nutzer vorliegend Möglichkeiten des Abrufens von eingegangenen Nachrichten (Eingang) als auch das Erstellen neuer Nachrichten "Neue Mitteilungen" zur Verfügung. Die entsprechenden Menüfelder sind seitens der Anzeigeeinrichtung des mobilen Endgerätes 1 beziehungsweise 7 in einem Anzeigebereich 18 dargestellt. Durch entsprechende Betätigungseingabe über eine Eingabeeinrichtung des mobilen Endgerätes 1 beziehungsweise 7 gelangt der Nutzer durch Auswahl des Menüpunktes "Eingang" dem in Fig. 4 nach rechts weisenden Pfeil folgend zu der seitens der Anzeigeeinrichtung wiedergegebenen Anzeige, vorliegend der Anzeige der eingegangenen Nachrichten ("Eingang"). Seitens der Anzeigeeinrichtung werden in Anzeigebereichen 18 dem Nutzer des mobilen Endgerätes 1 beziehungsweise 7 eingegangene Nachrichten angezeigt. Bei dem in Fig. 4 dargestellten Ausführungsbeispiel hat der Nutzer des mobilen Endgerätes 1 beziehungsweise 7 von "Max Meier" 2 neue Nachrichten beziehungsweise Mitteilungen erhalten. Insgesamt liegen im Nachrichteneingang 6 Mitteilungen von "Max Meier". Von "Mama" hat der Nutzer des mobilen Endgerätes 1 beziehungsweise 7 1 neue Nachricht beziehungsweise Mitteilung erhalten. Insgesamt liegen im Nachrichteneingang 2 Mitteilungen von "Mama" vor. Von "Gwenael" liegen keine neue Nachrichten beziehungsweise Mitteilungen vor. Im Nachrichteneingang des Nutzers des mobilen Endgerätes 1 beziehungsweise 7 befindet sich eine bereits gelesene Nachricht beziehungsweise Mitteilung von "Gwenael". Durch entsprechende Betätigungseingabe seitens einer Eingabeeinrichtung des mobilen Endgerätes 1 beziehungsweise 7 wählt der Nutzer vorliegend die Nachrichteneingänge von "Max Meier" aus. Die Auswahl ist dem in Fig. 4 nach links unten weisenden Pfeil folgend seitens der Anzeigeeinrichtung des mobilen Endgerätes 1 beziehungsweise 7 dargestellt. Die Nachricht von "Max Meier" ("15:51 - Hallo!") wird in einem Anzeigebereich 18 seitens der Anzeigeeinrichtung des mobilen Endgerätes 1 beziehungsweise 7 wiedergegeben. In einem darunterliegenden Anzeigebereich 19 kann der Nutzer des mobilen Endgerätes kann der Nutzer des mobilen Endgerätes 1 beziehungsweise 7 unter gleichzeitiger Anzeige der Nachricht von "Max Meier" auf die Nachricht antworten. Dabei werden gleichzeitig die Nachricht von "Max Meier" als auch die Antwortnachricht seitens der Anzeigeeinrichtung wiedergegeben, vorliegend in dem Anzeigebereich 18 die Nachricht von "Max Meier" und im Anzeigebereich 19 die Antwortnachricht auf die Nachricht von "Max Meier".

Die in den Figuren der Zeichnungen dargestellten Ausführungsbeispiele der Erfindung dienen lediglich der Erläuterung der Erfindung und sind für diese nicht beschränkend.

### Bezugszeichenliste:

- 1: mobiles Endgerät/Mobilfunktelefon
- 2: mobiles Endgerät/Mobilfunktelefon
- 3: Nachrichtenübertragung (SMS(MSISDN) oder MMS(MSISDN))
- 4: Endgerät/Rechner (Notebook)
- 5: Nachrichtenübertragung (MMS an E-Mail(MSISDN))
- 6: Nachrichtenübertragung (über MMS (E@sy-reply via MMS))
- 7: mobiles Endgerät/Mobilfunktelefon
- 8: mobiles Endgerät/Mobilfunktelefon
- 9: Nachrichtenübertragung (SMS(MSISDN) oder MMS(MSISDN))
- 10: mobiles Endgerät/Rechner (Notebook)
- 11: Nachrichtenübertragung (MMS an E-Mail(MSISDN) oder an E-Mail(user@thirdparty.com))
- 12: Nachrichtenübertragung (über MMS (E@SY-reply via MMS))
- 13: mobiles Endgerät/Mobilfunktelefon
- 14: Nachrichtenübertragung (an E-Mail(user@thirdparty.com))
- 15: Übergang Kommunikationsnetz
- 16: Anzeigebereich (Anzeigeeinrichtung mobiles Endgerät)
- 17: Anzeigebereich (Anzeigeeinrichtung mobiles Endgerät)
- 18: Anzeigebereich (Anzeigeeinrichtung mobiles Endgerät)
- 19: Anzeigebereich (Anzeigeeinrichtung mobiles Endgerät)

## Patentansprüche

1. Verfahren zur Erzeugung einer mittels wenigstens eines Nachrichtendienstes eines Mobilfunknetzes an wenigstens einen Empfänger (2, 4, 8, 10, 13) übertragbaren Nachricht seitens eines in einem Mobilfunknetz betreibbaren mobilen Endgerätes (1, 7),
wobei
die Nachricht
als eine Antwortnachricht auf eine seitens des mobilen Endgerätes (1, 7) empfangene und/oder bevorratete Nachricht erzeugt wird,
die Nachricht
wenigstens eine Kontaktinformation des wenigstens einen Empfängers (2, 4, 8, 10, 13) der Nachricht und einen wenigstens einen Informationstyp beinhaltenden Nachrichteninhalt aufweist,
der Nachrichteninhalt der Nachricht durch zumindest eine seitens wenigstens einer Eingabeeinrichtung des mobilen Endgerätes (1, 7) erfolgende Betätigungseingabe erfasst und zumindest im Rahmen der Erfassung in einem Anzeigebereich (16, 17, 18, 19) einer optischen Anzeigeeinrichtung des mobilen Endgerätes (1, 7) wiedergegeben wird und wobei
seitens des mobilen Endgerätes (1, 7) anhand des erfassten Nachrichteninhalts der Nachricht automatisch der Nachrichtendienst des Mobilfunknetzes zur Übertragung der Nachricht bestimmt wird, **dadurch gekennzeichnet,**
**dass**
in einem ersten Anzeigebereich (18) der optischen Anzeigeeinrichtung des mobilen Endgerätes (1, 7) zumindest der Nachrichteninhalt der seitens des mobilen Endgerätes (1, 7) empfangenen und/oder bevorrateten Nachricht zumindest teilweise wiedergegeben wird und in einem zweiten Anzeigebereich (19) der optischen Anzeigeeinrichtung des mobilen Endgerätes (1, 7) zumindest der erfasste Nachrichteninhalt der zu erzeugenden Nachricht zumindest teilweise wiedergegeben wird, und dass der erste Anzeigebereich (18) und der zweite Anzeigebereich (19) gleichzeitig wiedergegeben werden, wobei
in dem jeweiligen Anzeigebereich der Nachrichteninhalt zumindest bei Bedarf scrollbar wiedergegeben wird.

2. Verfahren nach Anspruch 1, **dadurch gekennzeichnet, dass** im Rahmen der Bestimmung des Nachrichtendienstes des Mobilfunknetzes zur Übertragung der Nachricht die zur Verfügung stehende wenigstens eine Kontaktinformation des wenigstens einen Empfängers (2, 4, 8, 10, 13) berücksichtigt wird.

3. Verfahren nach Anspruch 1 oder Anspruch 2, **dadurch gekennzeichnet, dass** die Bestimmung des Nachrichtendienstes des Mobilfunknetzes zur Übertragung der Nachricht unter Berücksichtigung nutzerspezifischer Vorgaben erfolgt.

4. Verfahren nach Anspruch 3, **dadurch gekennzeichnet, dass** die Bestimmung des Nachrichtendienstes des Mobilfunknetzes zur Übertragung der Nachricht unter Berücksichtigung der Übertragungskosten erfolgt.

5. Verfahren nach einem der Ansprüche 1 bis 4, **dadurch gekennzeichnet, dass** die Nachricht durch Zusammenführung der wenigstens einen Kontaktinformation des wenigstens einen Empfängers (2, 4, 8, 10, 13) und des Nachrichteninhalts seitens des mobilen Endgerätes (1, 7) erzeugt wird.

6. Verfahren nach einem der Ansprüche 1 bis 4 5, **dadurch gekennzeichnet, dass** die Nachricht mittels des bestimmten Nachrichtendienstes des Mobilfunknetzes an den wenigstens einen Empfänger (2, 4, 8, 10, 13) übertragen wird.

7. Verfahren nach Anspruch 5, **dadurch gekennzeichnet, dass** die Nachricht mittels des bestimmten Nachrichtendienstes des Mobilfunknetzes an den wenigstens einen Empfänger (2, 4, 8, 10, 13) initiiert durch eine seitens einer Eingabeeinrichtung des mobilen Endgerätes erfolgende Betätigungseingabe übertragen wird.

8. Verfahren nach Anspruch 6 oder Anspruch 7, **dadurch gekennzeichnet, dass** die Nachricht mittels des bestimmten Nachrichtendienstes des Mobilfunknetzes an den wenigstens einen Empfänger (2, 4, 8, 10, 13) übertragen wird, ohne dass weitere Betätigungseingaben erforderlich sind.

9. Verfahren nach einem der Ansprüche 6 bis 8, **dadurch gekennzeichnet, dass** die Übertragung der Nachricht mit der Nachrichtenerzeugung initiiert wird.

10. Verfahren nach Anspruch 9, **dadurch gekennzeichnet, dass** die Übertragung der Nachricht mit der Nachrichtenerzeugung automatisch mit und/oder durch Abschluss der Erfassung des Nachrichteninhalts der Nachricht initiiert wird.

11. Verfahren nach einem der Ansprüche 1 bis 10, **dadurch gekennzeichnet, dass** in den Anzeigebereichen neben dem Nachrichteninhalt auch der Nachrichtensender beziehungsweise der Nachrichtenempfänger (2, 4, 8, 10, 13) wiedergegeben und/oder kenntlich gemacht werden.

12. Verfahren nach einem der Ansprüche 1 bis 11, **gekennzeichnet durch** eine Ausführung mittels eines seitens des mobilen Endgerätes (1, 7) und/oder eines seitens eines von dem mobilen Endgerät (1, 7) genutzten Mobilfunkteilnehmer-Identifikations-Moduls ausführbaren Anwendungsprogramms.

13. Verfahren nach einem der Ansprüche 1 bis 11, **gekennzeichnet durch** eine Ausführung mittels eines seitens des mobilen Endgerätes (1, 7) und/oder eines seitens des Mobilfunkteilnehmer-Identifikations-Moduls gespeicherten Applets.

14. Mobiles Endgerät (1, 7) zum Betrieb in einem Mobilfunknetz, insbesondere Mobilfunktelefon, vorzugsweise gemäß dem GSM- und/oder UMTS-Funknetzstandard,
**dadurch gekennzeichnet,**
**dass** dieses zur Ausführung eines Verfahrens nach einem der Ansprüche 1 bis 13 ausgebildet und/oder eingerichtet ist.

15. Mobilfunkteilnehmer-Identifikations-Modul zur Nutzung in einem in einem Mobilfunknetz betreibbaren mobilen Endgerät (1, 7), vorzugsweise gemäß dem GSM- und/oder UMTS-Funknetzstandard,
**dadurch gekennzeichnet,**
**dass** dieses zur Ausführung eines Verfahrens nach einem der Ansprüche 1 bis 13 in einem mobilen Endgerät nach Anspruch 14 ausgebildet und/oder eingerichtet ist.

## Claims

1. A method for generating a message, which can be transmitted to at least one receiver (2, 4, 8, 10, 13) by means of at least one message service of a mobile radio network, by means of a mobile terminal (1, 7) that is operable in a mobile radio network,
wherein
the message
is generated as a reply message to a message received and/or stored by the mobile terminal (1, 7),
the message
comprises at least one contact information item of the at least one receiver (2, 4, 8, 10, 13) of the message and a message content comprising at least one information type,
the message content of the message will be recorded by means of at least one actuation input realized by means of at least one input device of the mobile terminal (1, 7) and be reproduced within the scope of the recording in a display area (16, 17, 18, 19) of an optical display device of the mobile terminal (1, 7),
and wherein
the mobile terminal (1, 7) automatically determines the message service of the mobile radio network for transmitting the message on the base of the recorded message content of the message,
**characterized in**
**that**
at least the message content of the message received and/or stored by the mobile terminal (1, 7) will be at least partly reproduced in a first display area (18) of the optical display device of the mobile terminal (1, 7) and at least the recorded message content of the message to be generated will be at least partly reproduced in the second display area (19) of the optical display device of the mobile terminal (1, 7), and that the first display area (18) and the second display area (19) will be simultaneously reproduced, wherein
the message content will be reproduced in the respective display area in a scrolling manner at least when required.

2. A method according to claim 1, **characterized in that** within the scope of determining the message service of the mobile radio network for transmitting the message the available at least one contact information item of the at least one receiver (2, 4, 8, 10, 13) will be considered.

3. A method according to claim 1 or claim 2, **characterized in that** the message service of the mobile radio network for transmitting the message will be determined in consideration of user specific requirements.

4. A method according to claim 3, **characterized in that** the message service of the mobile radio network for transmitting the message will be determined in consideration of the transmission costs.

5. A method according to one of the claims 1 to 4, **characterized in that** the message will be generated by aggregating the at least one contact information item of the at least one receiver (2, 4, 8, 10, 13) and the message content by means of the mobile terminal (1, 7)

6. A method according to one of the claims 1 to 5, **characterized in that** the message will be transmitted to the at least one receiver (2, 4, 8, 10, 13) by means of the determined message service of the mobile radio network.

7. A method according to claim 5, **characterized in that** the message will be transmitted to the at least one receiver (2, 4, 8, 10, 13) by means of the determined message service of the mobile radio network, wherein the transmission will be initiated by an actuation input realized by means of an input device of the mobile terminal.

8. A method according to claim 6 or claim 7, **characterized in that** the message will be transmitted to the at least one receiver (2, 4, 8, 10, 13) by means of the determined message service of the mobile radio network without further actuation inputs being required.

9. A method according to one of the claims 6 to 8, **characterized in that** the transmission of the message will be initiated with the generation of the message.

10. A method according to claim 9, **characterized in that** the transmission of the message will be automatically initiated with the generation of the message with and/or by completion of the recording of the message content of the message.

11. A method according to one of the claims 1 to 10, **characterized in that** apart from the message content also the message sender or the message receiver (2, 4, 8, 10, 13) will be reproduced and/or marked in the display areas.

12. A method according to one of the claims 1 to 11, **characterized by** an execution by means of an application program which can be carried out by means of the mobile terminal (1, 7) and/or by means of a mobile subscriber identification module used by the mobile terminal (1, 7).

13. A method according to one of the claims 1 to 11, **characterized by** an execution by means of an applet stored by the mobile terminal (1, 7) and/or by the mobile subscriber identification module.

14. A mobile terminal (1, 7) to be operated in a mobile radio network, in particular a mobile telephone, preferably according to the GSM and/or UMTS radio network standard,
**characterized in**
**that** this one is designed and/or adapted to carry out a method according to one of the claims 1 to 13.

15. A mobile subscriber identification module for the use in a mobile terminal (1, 7) to be operated in a mobile radio network, preferably according to the GSM and/or UMTS radio network standard,
**characterized in**
**that** this one is designed and/or adapted to carry out a method according to one of the claims 1 to 13 in a mobile terminal according to claim 14.

## Revendications

1. Procédé de génération d'un message, qui est transmissible à au moins un récepteur (2, 4, 8, 10, 13) à l'aide d'au moins un service de messages d'un réseau radio mobile, par moyen d'un terminal mobile (1, 7) fonctionnant dans un réseau radio mobile,
dans lequel
le message
est généré en tant que message de réponse à un message reçu et/ou stocké par le terminal mobile (1, 7),
le message
comprend au moins une information de contact de l'au moins un récepteur (2, 4, 8, 10, 13) du message et un contenu de message comprenant au moins un type d'information,
le contenu de message du message est saisi par moyen d'au moins une entrée d'actionnement réalisée à l'aide d'au moins un dispositif d'entrée du terminal mobile (1, 7) et est reproduit dans le cadre de la saisie dans une zone d'affichage (16, 17, 18, 19) d'un dispositif d'affichage optique du terminal mobile (1, 7),
et dans lequel
le terminal mobile (1, 7) détermine automatiquement le service de messages du réseau radio mobile pour la transmission du message sur la base du contenu de message saisi du message,
**caractérisé en ce**
**qu'**au moins le contenu de message du message reçu et/ou stocké par le terminal mobile (1, 7) est au moins partiellement reproduit dans une première zone d'affichage (18) du dispositif d'affichage optique du terminal mobile (1, 7) et au moins le contenu de message saisi du message à générer est au moins partiellement reproduit dans la deuxième zone d'affichage (19) du dispositif d'affichage optique du terminal mobile (1, 7), et que la première zone d'affichage (18) et la deuxième zone d'affichage (19) sont simultanément reproduites,
le contenu de message étant reproduit dans la zone d'affichage respective d'une manière défilante, si nécessaire.

2. Procédé selon la revendication 1, **caractérisé en ce que** dans le cadre de la détermination du service de messages du réseau radio mobile pour transmettre le message, l'au moins une information de contact disponible de l'au moins un récepteur (2, 4, 8, 10, 13) est prise en compte.

3. Procédé selon la revendication 1 ou la revendication 2, **caractérisé en ce que** le service de messages du réseau radio mobile pour transmettre le message est déterminé en tenant compte des spécifications propres à l'utilisateur.

4. Procédé selon la revendication 3, **caractérisé en ce que** le service de messages du réseau radio mobile pour transmettre le message est déterminé en tenant compte des coûts de transmission.

5. Procédé selon l'une des revendications 1 à 4, **caractérisé en ce que** le message est généré par agrégation de l'au moins une information de contact de l'au moins un récepteur (2, 4, 8, 10, 13) et du contenu de message par moyen du terminal mobile (1, 7).

6. Procédé selon l'une des revendications 1 à 5, **caractérisé en ce que** le message est transmis à l'au moins un récepteur (2, 4, 8, 10, 13) par moyen du service de messages déterminé du réseau radio mobile.

7. Procédé selon la revendication 5, **caractérisé en ce que** le message est transmis à l'au moins un récepteur (2, 4, 8, 10, 13) par moyen du service de messages déterminé du réseau radio mobile, la transmission étant initiée par une entrée d'actionnement réalisée à l'aide d'un dispositif d'entrée du terminal mobile.

8. Procédé selon la revendication 6 ou la revendication 7, **caractérisé en ce que** le message est transmis à l'au moins un récepteur (2, 4, 8, 10, 13) par moyen du service de messages déterminé du réseau radio mobile, sans qu'il faille d'autres entrées d'actionnement.

9. Procédé selon l'une des revendications 6 à 8, **caractérisé en ce que** la transmission du message est initiée avec la génération du message.

10. Procédé selon la revendication 9, **caractérisé en ce que** la transmission du message est automatiquement initiée avec la génération du message avec et/ou par l'achèvement de la saisie du contenu de message du message.

11. Procédé selon l'une des revendications 1 à 10, **caractérisé en ce que**, outre le contenu de message, l'expéditeur du message ou le récepteur du message (2, 4, 8, 10, 13) est reproduit et/ou rendu reconnaissable dans les zones d'affichage.

12. Procédé selon l'une des revendications 1 à 11, **caractérisé par** une exécution par moyen d'un programme d'application, qui peut être exécuté par moyen du terminal mobile (1, 7) et/ou par moyen d'un module d'identification d'abonné mobile utilisé par le terminal mobile (1, 7).

13. Procédé selon l'une des revendications 1 à 11, **caractérisé par** une exécution par moyen d'un applet stocké par le terminal mobile (1, 7) et/ou par le module d'identification d'abonné mobile.

14. Terminal mobile (1, 7) destiné au fonctionnement dans un réseau radio mobile, notamment un téléphone mobile, de préférence selon le standard de réseau radio GSM et/ou UMTS,
**caractérisé en ce**
**que** celui-ci est conçu pour et/ou adapté à l'exécution d'un procédé selon l'une des revendications 1 à 13.

15. Module d'identification d'abonné mobile destiné à l'utilisation dans un terminal mobile (1, 7) fonctionnant dans un réseau radio mobile, de préférence selon le standard de réseau radio GSM et/ou UMTS,
**caractérisé en ce**
**que** celui-ci est conçu pour et/ou adapté à l'exécution d'un procédé selon l'une des revendications 1 à 13 dans un terminal mobile selon la revendication 14.
